# FASCICULE DE BREVET EUROPEEN

(11) **EP 3 473 548 B1**
(45) Date de publication et mention de la délivrance du brevet: **04.12.2019**
(21) Numéro de dépôt: 18197689.5
(22) Date de dépôt: 28.09.2018
(51) Int. Cl.: B64D 27/26

(54) **PROCEDE D'ASSEMBLAGE D'UNE STRUCTURE PRIMAIRE D'UN MÂT D'AERONEF**
VERFAHREN ZUM ZUSAMMENBAU EINER PRIMÄRSTRUKTUR EINES TRÄGERS FÜR EIN LUFTFAHRZEUG
METHOD FOR ASSEMBLING A PRIMARY STRUCTURE OF AN AIRCRAFT BEAM

(30) Priorité: 18.10.2017 FR 1759784; 23.02.2018 FR 1851599
(43) Date de publication de la demande: 24.04.2019
(73) Titulaire: Airbus Operations S.A.S., 31060 Toulouse (FR); Airbus Operations Limited, Bristol BS34 7PA (GB)
(72) Inventeur: DOSTES, Stéphane, 31530 MONTAIGUT SUR SAVE (FR); THERON, Thierry, 31770 COLOMIERS (FR); BENABEN, Audrey, 31300 TOULOUSE (FR); DEFORET, Thomas, 31300 TOULOUSE (FR); MOULIS, Julien, 31530 LE CASTERA (FR); DEDIEU, Joël, 09000 SAINT JEAN DE VERGES (FR); WHIFFEN, Robert, ELLESMERE PORT, CHESHIRE, CH65 6SZ (GB); MARTINEL, François, 31770 COLOMIERS (FR)
(74) Mandataire: Sarraméa, Claude

(56) Documents cités:
- WO-A1-2010/018323
- FR-A1- 2 915 178
- US-A1- 2015 251 768

## Description

La présente demande se rapporte à un procédé d'assemblage d'une structure primaire d'un mât d'aéronef ainsi qu'à une structure primaire d'un mât d'aéronef ainsi obtenue.

Un aéronef comprend, pour relier chaque moteur à la voilure, un mât qui présente une structure primaire rigide, qui assure entre autres la transmission des efforts entre le moteur et la voilure, et une structure secondaire qui enveloppe la structure primaire et qui limite la traînée du mât.

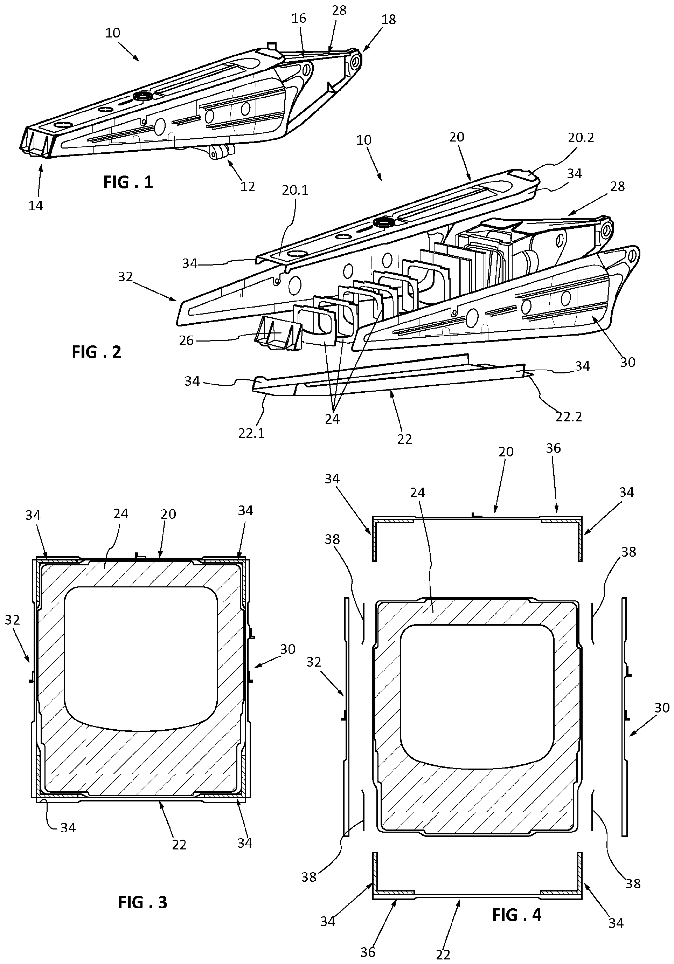

Selon une configuration visible sur les figures 1 et 2, la structure primaire 10 est reliée d'une part au moteur par une attache moteur arrière 12, une attache moteur avant 14 et un couple de bielles de poussée qui assurent la reprise des efforts de poussée et, d'autre part, à la voilure par au moins une attache voilure avant 16 et une attache voilure arrière 18.

La structure primaire 10 comprend :
- un longeron supérieur 20,
- un longeron inférieur 22,
- des cadres transversaux 24 qui relient les longerons supérieur et inférieur 20, 22, qui sont disposés dans des plans transversaux et qui ont chacun un contour approximativement carré ou rectangulaire,
- une paroi d'extrémité avant 26 qui relie une extrémité avant 20.1 du longeron supérieur 20 et une extrémité avant 22.1 du longeron inférieur 22,
- une partie d'extrémité arrière 28 qui relie une extrémité arrière 20.2 du longeron supérieur 20 et une extrémité arrière 22.2 du longeron inférieur 22,
- deux panneaux latéraux 30, 32 disposés de part et d'autre des cadres transversaux 24 ainsi que quatre cornières 34 reliant chaque longeron 20, 22 à chaque panneau latéral 30, 32.

Selon un mode d'assemblage, lors d'une première étape, les cornières 34 sont fixées sur les bords des longerons supérieur et inférieur 20, 22. Ainsi, chaque longeron supérieur ou inférieur 20, 22 équipé de deux cornières 34 a une forme en U 36, comme illustré sur la figure 4.

Lors d'une deuxième étape, les cadres transversaux 24 sont insérés entre les branches des formes en U 36 des longerons supérieur et inférieur 20, 22 équipés des cornières 34. Il en est de même de la paroi d'extrémité avant 26 et de la partie d'extrémité arrière 28.

En raison des formes en U 36 et des tolérances de fabrication, des jeux de montage sont nécessaires entre les cadres transversaux 24 et les branches des formes en U 36 des longerons supérieur et inférieur 20, 22 équipés des cornières 34.

Pour la reprise des efforts en fonctionnement, ces jeux de montage doivent être comblés. Par conséquent, ces jeux de montage sont mesurés et des cales pelables 38 réglées en fonction des jeux mesurés sont mises en place au niveau des jeux de montage.

En suivant, les panneaux latéraux 30, 32 sont mis en place. Les différentes pièces sont fixées de manière temporaire en un nombre de points réduits. Elles sont alors percées et des fixations définitives sont mises en place.

La mesure des jeux de montage, le réglage des cales et leur mise en place requièrent beaucoup de temps. De plus, afin de réduire les jeux de montage, les tolérances de fabrication des longerons 20, 22 et des cadres transversaux 24 sont très réduites ce qui entraîne un coût de fabrication élevé.

Le document FR2915178A1 décrit une structure primaire d'un mât d'un aéronef selon l'art antérieur. Les documents WO2010/018323A1 et US2015/251768A1 décrivent des mâts pour moteur d'aéronef selon l'art antérieur, dont la structure primaire est telle que les longerons et les panneaux latéraux sont fixés après l'assemblage des cadres et des cornières. L'assemblage desdites structures primaires est par conséquent sujet aux inconvénients précités.

La présente invention vise à remédier aux inconvénients de l'art antérieur.

A cet effet, l'invention a pour objet un procédé d'assemblage d'une structure primaire d'un mât d'aéronef qui comprend :
- des cadres transversaux avec chacun un contour, approximativement carré ou rectangulaire, comprenant quatre côtés,
- des premier et deuxième longerons positionnés au-dessus et au-dessous des cadres transversaux,
- des premier et deuxième panneaux latéraux disposés de part et d'autre des cadres transversaux,
- quatre cornières reliant chaque longeron à chaque panneau latéral, logées dans des décrochements prévus sur les cadres transversaux.

Selon l'invention, le procédé d'assemblage comprend une étape de fixation d'une cornière sur chacun des premier et deuxième panneaux latéraux de manière à obtenir une forme en L pour chacun des premier et deuxième panneaux latéraux préalablement à une mise en place desdites formes en L plaquées chacune contre deux côtés de chaque cadre transversal.

Ce procédé d'assemblage permet de supprimer au moins la moitié des jeux de montage. Cette absence de jeux permet de supprimer les étapes de mesure des jeux, de réglage de cales pelables en fonction des jeux de montage mesurés et de mise en place des cales pelables, ce qui se traduit par une réduction du temps d'assemblage de la structure primaire. De plus, les différentes pièces de la structure primaire peuvent être fabriquées avec des tolérances dimensionnelles moindres ce qui tend à réduire les coûts de fabrication.

Selon un premier mode de réalisation, le procédé d'assemblage comprend une étape de fixation d'une cornière sur chacun des premier et deuxième longerons de manière à obtenir une forme en L pour chacun des premier et deuxième longerons préalablement à une mise en place desdites formes en L plaquées chacune contre deux côtés de chaque cadre transversal. Selon ce premier mode de réalisation, une première aile d'une première cornière est reliée à un premier bord longitudinal du premier longeron, une deuxième aile d'une deuxième cornière est reliée à un premier bord longitudinal du premier panneau latéral, une première aile d'une troisième cornière est reliée à un premier bord longitudinal du deuxième longeron et une deuxième aile d'une quatrième cornière est reliée à un premier bord longitudinal du deuxième panneau latéral.

Selon ce premier mode de réalisation, le procédé d'assemblage comprend les étapes suivantes de :
- positionnement du premier longeron plaqué contre un premier côté des cadres transversaux et d'une deuxième aile de la première cornière plaquée contre un deuxième côté des cadres transversaux,
- positionnement du premier panneau latéral plaqué contre le deuxième côté des cadres transversaux et d'une première aile de la deuxième cornière plaquée contre un troisième côté des cadres transversaux, ledit premier panneau latéral recouvrant la deuxième aile de la première cornière,
- positionnement du deuxième longeron plaqué contre le troisième côté des cadres transversaux et d'une deuxième aile de la troisième cornière plaquée contre un quatrième côté des cadres transversaux, ledit deuxième longeron recouvrant la première aile de la deuxième cornière,
- positionnement du deuxième panneau latéral plaqué contre le quatrième côté des cadres transversaux et d'une première aile de la quatrième cornière plaquée contre le premier côté des cadres transversaux, en insérant la première aile de la quatrième cornière entre le premier côté des cadres transversaux et le premier longeron, le deuxième panneau latéral recouvrant la deuxième aile de la troisième cornière.

Selon un deuxième mode de réalisation, le procédé d'assemblage comprend une étape de fixation de deux cornières sur l'un des premier et deuxième longerons de manière à obtenir une forme en U préalablement à une mise en place des premier et deuxième longerons plaqués contre les côtés de chaque cadre transversal.

Selon ce deuxième mode de réalisation, le procédé d'assemblage comprend les étapes suivantes de :
- positionnement du longeron pourvu des deux cornières plaqué contre l'un des côtés des cadres transversaux, des ailes des deux cornières étant disposées de part et d'autre des cadres transversaux,
- positionnement des premier et deuxième panneaux latéraux plaqués contre deux côtés opposés des cadres transversaux, et
- positionnement du longeron non pourvu de cornière plaqué contre l'un des côtés des cadres transversaux.

Selon une autre caractéristique du deuxième mode de réalisation, le procédé d'assemblage comprend une étape de mise en place de :
- premières fixations, perpendiculaires à un plan médian vertical, traversant l'un des premier et deuxième panneaux latéraux, une aile d'une des deux cornières solidaires du premier ou deuxième longeron et au moins partiellement les cadres transversaux,
- deuxièmes fixations, perpendiculaires au plan médian vertical, traversant l'autre des premier et deuxième panneaux latéraux, une aile de l'autre cornière solidaire du premier ou deuxième longeron et au moins partiellement les cadres transversaux,
- troisièmes fixations, parallèles au plan médian vertical, traversant le longeron non pourvu de cornière, une aile d'une cornière solidaire d'un des premier et deuxième panneaux latéraux et au moins partiellement les cadres transversaux,
- quatrièmes fixations, parallèles au plan médian vertical, traversant le longeron non pourvu de cornière, une aile d'une cornière solidaire de l'autre des premier et deuxième panneaux latéraux et au moins partiellement les cadres transversaux.

L'invention a également pour objet une structure primaire d'un mât d'aéronef obtenue à partir du procédé d'assemblage précédemment défini.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une structure primaire d'un mât d'aéronef,
- La figure 2 est une vue en éclaté d'une structure primaire d'un mât d'aéronef qui illustre un mode de réalisation de l'art antérieur,
- La figure 3 est une coupe transversale de la structure primaire visible sur la figure 2,
- La figure 4 est une coupe transversale en éclaté de la structure primaire visible sur la figure 2,
- La figure 5 est une vue en éclaté d'une structure primaire d'un mât d'aéronef qui illustre un premier mode de réalisation de l'invention,
- La figure 6 est une coupe transversale de la structure primaire visible sur la figure 5,
- La figure 7 est une coupe transversale en éclaté de la structure primaire visible sur la figure 5,
- La figure 8 est une coupe transversale d'une structure primaire d'un mât d'aéronef qui illustre un deuxième mode de réalisation de l'invention,
- La figure 9 est une coupe transversale en éclaté de la structure primaire visible sur la figure 8.

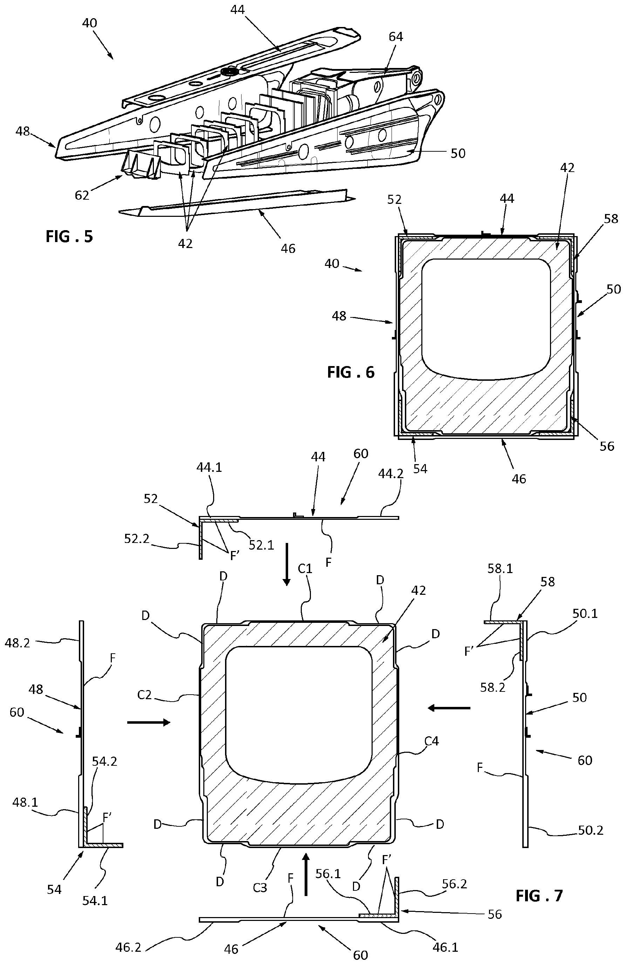

Selon les différents modes de réalisation visibles sur les figures 5 à 9, une structure primaire 40 comprend des cadres transversaux 42 avec chacun un contour approximativement carré ou rectangulaire, des premier et deuxième longerons 44, 46 positionnés au-dessus et au-dessous des cadres transversaux 42, des premier et deuxième panneaux latéraux 48, 50 disposés de part et d'autre des cadres transversaux 42, quatre cornières 52 à 58 reliant chaque longeron 44, 46 à chaque panneau latéral 48, 50.

Les cadres transversaux 42, les longerons 44, 46, les panneaux latéraux 48, 50 et les cornières 52 à 58 ne sont pas plus décrits car ils peuvent être identiques à ceux de l'art antérieur. De plus, la structure primaire 40 peut comprendre d'autres éléments comme par exemple une paroi d'extrémité avant et une partie d'extrémité arrière.

Chaque cadre transversal 42 comprend quatre côtés c1 à c4 qui présentent chacun des décrochements D pour recevoir les cornières 52 à 58.

Selon un mode de réalisation, les longerons 44, 46 et les panneaux 48, 50 se présentent sous la forme de plaques présentant chacune une face F orientée vers les cadres transversaux 42 lorsque la structure primaire 40 est assemblée.

Le premier longeron 44 comprend un premier bord longitudinal 44.1, qui jouxte le premier panneau latéral 48, et un deuxième bord longitudinal 44.2 qui jouxte le deuxième panneau latéral 50.

Le premier panneau latéral 48 comprend un premier bord longitudinal 48.1, qui jouxte le deuxième longeron 46, et un deuxième bord longitudinal 48.2 qui jouxte le premier longeron 44.

Le deuxième longeron 46 comprend un premier bord longitudinal 46.1, qui jouxte le deuxième panneau latéral 50, et un deuxième bord longitudinal 46.2 qui jouxte le premier panneau latéral 48.

Le deuxième panneau latéral 50 comprend un premier bord longitudinal 50.1, qui jouxte le premier longeron 44, et un deuxième bord longitudinal 50.2 qui jouxte le deuxième longeron 46.

Chaque cornière 52 à 58 comprend une première aile 52.1 à 58.1, configurée pour coopérer avec l'un des longerons 44, 46, et une deuxième aile 52.2 à 58.2 configurée pour coopérer avec l'un des panneaux latéraux 48,50. Chaque aile 52.1 à 58.1 et 52.2 à 58.2 présente une face F' orientée vers les cadres transversaux 42 lorsque la structure primaire 40 est assemblée. Les décrochements D des cadres transversaux 42 sont configurés pour loger les ailes 52.1 à 58.1 et 52.2 à 58.2 des cornières 52 à 58 de manière à ce que les longerons 44,46, les panneaux 48, 50 et les cornières 52 à 58 soient simultanément en contact avec les côtés c1 à c4 des cadres transversaux 42.

Selon un premier mode de réalisation de l'invention visible sur les figures 5 à 7, le procédé d'assemblage comprend une étape de fixation d'une cornière sur chacun des longerons 44, 46 et chacun des panneaux latéraux 48, 50 de manière à obtenir une forme en L 60.

Ainsi, la première aile 52.1 de la première cornière 52 est reliée au premier bord longitudinal 44.1 du premier longeron 44, la deuxième aile 54.2 de la deuxième cornière 54 est reliée au premier bord longitudinal 48.1 du premier panneau latéral 48, la première aile 56.1 de la troisième cornière 56 est reliée au premier bord longitudinal 46.1 du deuxième longeron 46 et la deuxième aile 58.2 de la quatrième cornière 58 est reliée au premier bord longitudinal 50.1 du deuxième panneau latéral 50.

Lors d'une deuxième étape, chaque forme en L 60 est plaquée contre deux côtés de chaque cadre transversal 42.

Ainsi, les faces F et F' des longerons 44, 46, des panneaux latéraux 48, 50 et des cornières 52 à 58 sont plaquées contre les cadres transversaux 42 sans qu'il ne subsiste de jeu nécessitant un calage.

Selon un mode opératoire, le procédé d'assemblage comprend les étapes suivantes de :
- positionnement du premier longeron 44 plaqué contre le premier côté c1 des cadres transversaux 42 et de la deuxième aile 52.2 de la première cornière 52 plaquée contre le deuxième côté c2 des cadres transversaux 42 ;
- positionnement du premier panneau latéral 48 plaqué contre le deuxième côté c2 des cadres transversaux 42, ledit premier panneau latéral 48 recouvrant la deuxième aile 52.2 de la première cornière 52, et de la première aile 54.1 de la deuxième cornière 54 plaquée contre le troisième côté c3 des cadres transversaux 42 ;
- positionnement du deuxième longeron 46 plaqué contre le troisième côté c3 des cadres transversaux 42, ledit deuxième longeron 46 recouvrant la première aile 54.1 de la deuxième cornière 54, et de la deuxième aile 56.2 de la troisième cornière 56 plaquée contre le quatrième côté c4 des cadres transversaux 42 ;
- positionnement du deuxième panneau latéral 50 plaqué contre le quatrième côté c4 des cadres transversaux 42, ledit deuxième panneau latéral 50 recouvrant la deuxième aile 56.2 de la troisième cornière 56, et de la première aile 58.1 de la quatrième cornière 58 plaquée contre le premier côté c1 des cadres transversaux 42, en l'insérant entre le premier côté c1 des cadres transversaux 42 et le premier longeron 44.

La structure primaire 40 peut comprendre d'autres éléments comme par exemple une paroi d'extrémité avant 62 et une partie d'extrémité arrière 64 contre lesquelles sont plaquées les formes en L 60.

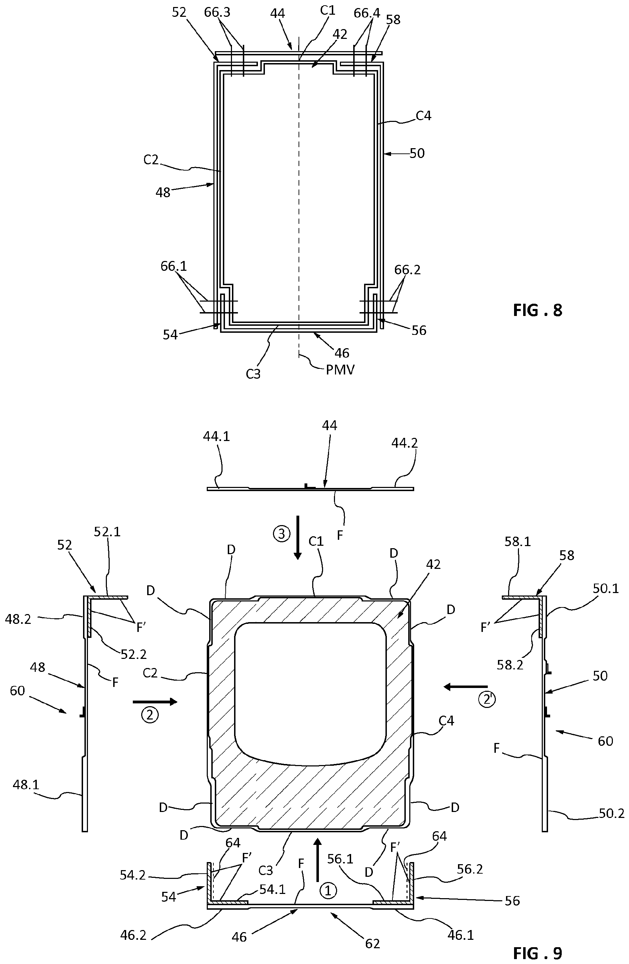

Selon un deuxième mode de réalisation visible sur les figures 8 et 9, le procédé d'assemblage comprend une étape de fixation d'une cornière sur chacun des panneaux latéraux 48, 50 de manière à obtenir une forme en L 60 et de deux cornières sur l'un des premier et deuxième longerons de manière à obtenir une forme en U 62. Selon l'exemple illustré sur les figures 8 et 9, deux cornières 54 et 56 sont fixées sur le deuxième longeron 46, positionné sous les cadres transversaux 42, de manière à obtenir la forme en U 62.

Selon ce deuxième mode de réalisation, lors d'une première étape, la deuxième aile 52.2 de la première cornière 52 est reliée au deuxième bord longitudinal 48.2 du premier panneau latéral 48, les premières ailes 54.1, 56.1 des deuxième et troisième cornières 54, 56 sont reliées aux premier et deuxième bords longitudinaux 46.1 et 46.2 du deuxième longeron 46 et la deuxième aile 58.2 de la quatrième cornière 58 est reliée au premier bord longitudinal 50.1 du deuxième panneau latéral 50.

Lors d'une deuxième étape, si nécessaire, une cale 64 est positionnée entre au moins l'une des deuxièmes ailes 54.2 et 56.2 des deuxième et troisième cornières 54 et 56 solidaires du deuxième longeron 46 et au moins un des cadres transversaux 42 et le deuxième longeron 46 (plus particulièrement sa face F) est positionné plaqué contre le deuxième côté c2 des cadres transversaux 42, les deuxièmes ailes 54.2, 56.2 des deuxième et troisième cornières 54 et 56 étant disposées de part et d'autre des cadres transversaux 42.

Lors d'une troisième étape, les premier et deuxième panneaux latéraux 48 et 50 sont positionnés plaqués contre les deuxième et quatrième côtés c2 et c4 des cadres transversaux 42.

Lors d'une quatrième étape, le premier longeron 44 est plaqué contre le premier côté c1 des cadres transversaux 42.

Pour finaliser l'assemblage, des premières et deuxièmes fixations 66.1, 66.2 sont mises en place, au niveau des deuxièmes ailes 54.2 et 56.2 des deuxième et troisième cornières 54 et 56, perpendiculairement à un plan médian vertical PMV (parallèle aux panneaux latéraux 48 et 50). Les premières fixations 66.1 traversent le premier panneau latéral 48, la deuxième aile 54.2 de la deuxième cornière 54 solidarisée au deuxième longeron 46 et au moins partiellement les cadres transversaux 42. Les deuxièmes fixations 66.2 traversent le deuxième panneau latéral 50, la deuxième aile 56.2 de la troisième cornière 56 solidarisée au deuxième longeron 46 et au moins partiellement les cadres transversaux 42.

Des troisièmes et quatrièmes fixations 66.3, 66.4 sont mises en place, au niveau des premières ailes 52.1 et 58.1 des première et quatrième cornières 52 et 58, parallèlement au plan médian vertical PMV. Les troisièmes fixations 66.3 traversent le premier longeron 44, la première aile 52.1 de la première cornière 52 solidarisée au premier panneau latéral 48 et au moins partiellement les cadres transversaux 42. Les quatrièmes fixations 66.4 traversent le premier longeron 44, la première aile 58.1 de la quatrième cornière 58 solidarisée au deuxième panneau latéral 50 et au moins partiellement les cadres transversaux 42.

Quel que soit le mode de réalisation, les premier et deuxième panneaux latéraux 48 et 50 comprennent chacun une cornière de manière à obtenir une forme en L 60.

Selon le premier mode de réalisation, les premier et deuxième panneaux latéraux 48 et 50 sont disposés tête bêche. Dans ce cas, les premier et deuxième longerons 44, 46 comprennent chacun une cornière de manière à obtenir une forme en L 60. Ce premier mode de réalisation permet de supprimer toutes les cales.

Selon un deuxième mode de réalisation, les premier et deuxième longerons 44, 46 sont symétriques par rapport au plan médian vertical PMV. Dans ce cas, l'un des premier et deuxième longerons 44, 46 comprend deux cornières de manière à obtenir une forme en U et l'autre des premier et deuxième longerons 44, 46 ne comprend aucune cornière. Ce deuxième mode de réalisation permet de supprimer la moitié des cales.

Quel que soit le mode de réalisation, l'invention permet de réduire la durée de l'assemblage de la structure primaire du fait qu'au moins 50% des cales soient supprimées.

De plus, les différentes pièces peuvent être fabriquées avec des tolérances dimensionnelles moindres, ce qui tend à réduire les coûts de fabrication.

Comme pour l'art antérieur, les cadres transversaux 42, les longerons 44, 46, les panneaux latéraux 48, 50 et les cornières 52 à 58 sont fixés de manière temporaire en un nombre de points réduits puis ils sont percés et des fixations définitives sont mises en place.

Selon une autre technique d'assemblage, compte tenu qu'au moins certaines pièces parmi les premier et deuxième longerons et les premier et deuxième panneaux latéraux peuvent coulisser les unes par rapport aux autres, il est possible d'utiliser une technique d'assemblage qui prévoit de réaliser les trous qui sont nécessaires pour loger les fixations 66.1 à 66.4 lors de la fabrication des pièces et non lors de l'assemblage.

## Revendications

1. Procédé d'assemblage d'une structure primaire d'un mât d'aéronef qui comprend :
- des cadres transversaux (42) avec chacun un contour, approximativement carré ou rectangulaire, comprenant quatre côtés (c1 à c4),
- des premier et deuxième longerons (44, 46) positionnés au-dessus et au-dessous des cadres transversaux (42),
- des premier et deuxième panneaux latéraux (48, 50) disposés de part et d'autre des cadres transversaux (42),
- quatre cornières (52 à 58) reliant chaque longeron (44, 46) à chaque panneau latéral (48, 50), logées dans des décrochements (D) prévus sur les cadres transversaux (42),
**caractérisé en ce que** le procédé d'assemblage comprend une étape de fixation d'une cornière (52 à 58) sur chacun des premier et deuxième panneaux latéraux (48, 50) de manière à obtenir une forme en L (60) pour chacun des premier et deuxième panneaux latéraux (48, 50) préalablement à une mise en place desdites formes en L (60) plaquées chacune contre deux côtés de chaque cadre transversal (42).

2. Procédé d'assemblage d'une structure primaire d'un mât d'aéronef selon la revendication 1, **caractérisé en ce que** le procédé d'assemblage comprend une étape de fixation d'une cornière (52 à 58) sur chacun des premier et deuxième longerons (44, 46) de manière à obtenir une forme en L (60) pour chacun des premier et deuxième longerons (44, 46) préalablement à une mise en place desdites formes en L (60) plaquées chacune contre deux côtés de chaque cadre transversal (42).

3. Procédé d'assemblage d'une structure primaire d'un mât d'aéronef selon la revendication précédente, **caractérisé en ce qu'**une première aile (52.1) d'une première cornière (52) est reliée à un premier bord longitudinal (44.1) du premier longeron (44), une deuxième aile (54.2) d'une deuxième cornière (54) est reliée à un premier bord longitudinal (48.1) du premier panneau latéral (48), une première aile (56.1) d'une troisième cornière (56) est reliée à un premier bord longitudinal (46.1) du deuxième longeron (46) et une deuxième aile (58.2) d'une quatrième cornière (58) est reliée à un premier bord longitudinal (50.1) du deuxième panneau latéral (50).

4. Procédé d'assemblage d'une structure primaire d'un mât d'aéronef selon la revendication précédente, **caractérisé en ce qu'**il comprend les étapes suivantes de :
- Positionnement du premier longeron (44) plaqué contre un premier côté (c1) des cadres transversaux (42) et d'une deuxième aile (52.2) de la première cornière (52) plaquée contre un deuxième côté (c2) des cadres transversaux (42),
- Positionnement du premier panneau latéral (48) plaqué contre le deuxième côté (c2) des cadres transversaux (42) et d'une première aile (54.1) de la deuxième cornière (54) plaquée contre un troisième côté (c3) des cadres transversaux (42), ledit premier panneau latéral (48) recouvrant la deuxième aile (52.2) de la première cornière (52),
- Positionnement du deuxième longeron (46) plaqué contre le troisième côté (c3) des cadres transversaux (42) et d'une deuxième aile (56.2) de la troisième cornière (56) plaquée contre un quatrième côté (c4) des cadres transversaux (42), ledit deuxième longeron (46) recouvrant la première aile (54.1) de la deuxième cornière (54),
- Positionnement du deuxième panneau latéral (50) plaqué contre le quatrième côté (c4) des cadres transversaux (42) et d'une première aile (58.1) de la quatrième cornière (58) plaquée contre le premier côté (c1) des cadres transversaux (42), en insérant la première aile (58.1) de la quatrième cornière (58) entre le premier côté (c1) des cadres transversaux (42) et le premier longeron (44), le deuxième panneau latéral (50) recouvrant la deuxième aile (56.2) de la troisième cornière (56).

5. Procédé d'assemblage d'une structure primaire d'un mât d'aéronef selon la revendication 1, **caractérisé en ce que** le procédé d'assemblage comprend une étape de fixation de deux cornières (54, 56) sur l'un des premier et deuxième longerons (44, 46) de manière à obtenir une forme en U (62) préalablement à une mise en place des premier et deuxième longerons (44,46) plaqués contre les côtés de chaque cadre transversal (42).

6. Procédé d'assemblage d'une structure primaire d'un mât d'aéronef selon la revendication précédente, **caractérisé en ce qu'**il comprend les étapes suivantes de :
- positionnement du longeron (46), pourvu des deux cornières (54, 56), plaqué contre l'un des côtés (c2) des cadres transversaux (42), des ailes (54.2, 56.2) des deux cornières (54, 56) étant disposées de part et d'autre des cadres transversaux (42),
- positionnement des premier et deuxième panneaux latéraux (48, 50) plaqués contre deux côtés opposés (c2, c4) des cadres transversaux (42), et
- positionnement du longeron (44), non pourvu de cornière, plaqué contre l'un des côtés (c1) des cadres transversaux (42).

7. Procédé d'assemblage d'une structure primaire d'un mât d'aéronef selon la revendication précédente, **caractérisé en ce que** le procédé d'assemblage comprend une étape de mise en place de :
- premières fixations (66.1), perpendiculaires à un plan médian vertical (PMV), traversant l'un des premier et deuxième panneaux latéraux (48), une aile (54.2, 56.2) d'une des deux cornières (54, 56) solidaires du premier ou deuxième longeron (46) et au moins partiellement les cadres transversaux (42),
- deuxièmes fixations (66.2), perpendiculaires au plan médian vertical (PMV), traversant l'autre des premier et deuxième panneaux latéraux (48, 50), une aile (54.2, 56.2) de l'autre cornière (54, 56) solidaire du premier ou deuxième longeron (44, 46) et au moins partiellement les cadres transversaux (42),
- troisièmes fixations (66.3), parallèles au plan médian vertical (PMV), traversant le longeron (44) non pourvu de cornière, une aile (52.1) d'une cornière solidaire d'un des premier et deuxième panneaux latéraux (48) et au moins partiellement les cadres transversaux (42),
- quatrièmes fixations (66.3), parallèles au plan médian vertical (PMV) traversant le longeron (44) non pourvu de cornière, une aile (52.1) d'une cornière solidaire de l'autre des premier et deuxième panneaux latéraux (48) et au moins partiellement les cadres transversaux (42).

## Patentansprüche

1. Verfahren zum Zusammenbau einer Primärstruktur eines Trägers für ein Luftfahrzeug, der Folgendes umfasst:
- Querrahmen (42) mit jeweils einer ungefähr quadratischen oder rechteckigen Kontur, umfassend vier Seiten (c1 bis c4),
- erste und zweite Längsträger (44, 46), die oberhalb und unterhalb der Querrahmen (42) positioniert sind,
- erste und zweite Seitenpaneele (48, 50), die beiderseits der Querrahmen (42) angeordnet sind,
- vier Winkel (52 bis 58), die jeden Längsträger (44, 46) mit jedem Seitenpaneel (48, 50) verbinden, die in Absätzen (D) aufgenommen sind, die auf den Querrahmen (42) vorgesehen sind,
**dadurch gekennzeichnet, dass** das Verfahren zum Zusammenbau einen Schritt des Befestigens eines Winkels (52 bis 58) an jedem des ersten und zweiten Seitenpaneels (48, 50) zum Erzielen einer L-Form (60) für jedes des ersten und zweiten Seitenpaneels (48, 50) vor einem Anbringen der L-Formen (60) jeweils gegen zwei Seiten jedes Querrahmens (42) gedrückt umfasst.

2. Verfahren zum Zusammenbau einer Primärstruktur eines Trägers für ein Luftfahrzeug nach Anspruch 1, **dadurch gekennzeichnet, dass** das Verfahren zum Zusammenbau einen Schritt des Befestigens eines Winkels (52 bis 58) an jedem des ersten und zweiten Längsträgers (44, 46) zum Erzielen einer L-Form (60) für jeden des ersten und zweiten Längsträgers (44, 46) vor einem Anbringen der L-Formen (60) jeweils gegen zwei Seiten jedes Querrahmens (42) gedrückt umfasst.

3. Verfahren zum Zusammenbau einer Primärstruktur eines Trägers für ein Luftfahrzeug nach dem vorhergehenden Anspruch, **dadurch gekennzeichnet, dass** ein erster Flügel (52.1) eines ersten Winkels (52) mit einer ersten Längskante (44.1) des ersten Längsträgers (44) verbunden ist, ein zweiter Flügel (54.2) eines zweiten Winkels (54) mit einer ersten Längskante (48.1) des ersten Seitenpaneels (48) verbunden ist, ein erster Flügel (56.1) eines dritten Winkels (56) mit einer ersten Längskante (46.1) des zweiten Längsträgers (46) verbunden ist und ein zweiter Flügel (58.2) eines vierten Winkels (58) mit einer ersten Längskante (50.1) des zweiten Seitenpaneels (50) verbunden ist.

4. Verfahren zum Zusammenbau einer Primärstruktur eines Trägers für ein Luftfahrzeug nach dem vorhergehenden Anspruch, **dadurch gekennzeichnet, dass** es die folgenden Schritte umfasst:
- Positionieren des ersten Längsträgers (44) gegen eine erste Seite (c1) der Querrahmen (42) gedrückt und eines zweiten Flügels (52.2) des ersten Winkels (52) gegen eine zweite Seite (c2) der Querrahmen (42) gedrückt,
- Positionieren des ersten Seitenpaneels (48) gegen die zweite Seite (c2) der Querrahmen (42) gedrückt und eines ersten Flügels (54.1) des zweiten Winkels (54) gegen eine dritte Seite (c3) der Querrahmen (42) gedrückt, wobei das erste Seitenpaneel (48) den zweiten Flügel (52.2) des ersten Winkels (52) bedeckt,
- Positionieren des zweiten Längsträgers (46) gegen die dritte Seite (c3) der Querrahmen (42) gedrückt und eines zweiten Flügels (56.2) des dritten Winkels (56) gegen eine vierte Seite (c4) der Querrahmen (42) gedrückt, wobei der zweite Längsträger (46) den ersten Flügel (54.1) des zweiten Winkels (54) bedeckt,
- Positionieren des zweiten Seitenpaneels (50) gegen die vierte Seite (c4) der Querrahmen (42) gedrückt und eines ersten Flügels (58.1) des vierten Winkels (58) gegen die erste Seite (c1) der Querrahmen (42) gedrückt durch Einfügen des ersten Flügels (58.1) des vierten Winkels (58) zwischen der ersten Seite (c1) der Querrahmen (42) und dem ersten Längsträger (44), wobei das zweite Seitenpaneel (50) den zweiten Flügel (56.2) des dritten Winkels (56) bedeckt.

5. Verfahren zum Zusammenbau einer Primärstruktur eines Trägers für ein Luftfahrzeug nach Anspruch 1, **dadurch gekennzeichnet, dass** das Verfahren zum Zusammenbau einen Schritt des Befestigens zweier Winkel (54, 56) an einem des ersten und zweiten Längsträgers (44, 46) zum Erzielen einer U-Form (62) vor einem Anbringen des ersten und zweiten Längsträgers (44, 46) gegen die Seiten jedes Querrahmens (42) gedrückt umfasst.

6. Verfahren zum Zusammenbau einer Primärstruktur eines Trägers für ein Luftfahrzeug nach dem vorhergehenden Anspruch, **dadurch gekennzeichnet, dass** es die folgenden Schritte umfasst:
- Positionieren des Längsträgers (46), der mit den zwei Winkeln (54, 56) versehen ist, gegen die eine der Seiten (c2) der Querrahmen (42) gedrückt, wobei Flügel (54.2, 56.2) der zwei Winkel (54, 56) beiderseits der Querrahmen (42) angeordnet sind,
- Positionieren des ersten und zweiten Seitenpaneels (48, 50) gegen zwei gegenüberliegende Seiten (c2, c4) der Querrahmen (42) gedrückt, und
- Positionieren des Längsträgers (44), der nicht mit Winkeln versehen ist, gegen eine der Seiten (c1) der Querrahmen (42) gedrückt.

7. Verfahren zum Zusammenbau einer Primärstruktur eines Trägers für ein Luftfahrzeug nach dem vorhergehenden Anspruch, **dadurch gekennzeichnet, dass** das Verfahren zum Zusammenbau einen Schritt des Anbringens von Folgendem umfasst:
- ersten Befestigungen (66.1), die senkrecht zu einer vertikalen Mittelebene (PMV) verlaufen, die eins des ersten und zweiten Seitenpaneels (48), einen Flügel (54.2, 56.2) eines der zwei Winkel (54, 56), die fest mit dem ersten oder zweiten Längsträger (46) verbunden sind, und zumindest teilweise die Querrahmen (42) durchqueren,
- zweite Befestigungen (66.2), die senkrecht zur vertikalen Mittelebene (PMV) verlaufen, die das andere des ersten und zweiten Seitenpaneels (48, 50), einen Flügel (54.2, 56.2) des anderen Winkels (54, 56), der fest mit dem ersten oder zweiten Längsträger (44, 46) verbunden ist, und zumindest teilweise die Querrahmen (42) durchqueren,
- dritte Befestigungen (66.3), die parallel zur vertikalen Mittelebene (PMV) verlaufen, die den Längsträger (44), der nicht mit Winkeln versehen ist, einen Flügel (52.1) eines Winkels, der fest mit einem des ersten und zweiten Seitenpaneels (48) verbunden ist, und zumindest teilweise die Querrahmen (42) durchqueren,
- vierte Befestigungen (66.3), die parallel zur vertikalen Mittelebene (PMV) verlaufen, die den Längsträger (44), der nicht mit Winkeln versehen ist, einen Flügel (52.1) eines Winkels, der fest mit dem anderen des ersten und zweiten Seitenpaneels (48) verbunden ist, und zumindest teilweise die Querrahmen (42) durchqueren.

## Claims

1. Method for assembling a primary structure of an aircraft pylon, which comprises:
- transverse frames (42) each with an approximately square or rectangular contour comprising four sides (c1 to c4),
- first and second longitudinal members (44, 46) positioned above and below the transverse frames (42),
- first and second lateral panels (48, 50) arranged on either side of the transverse frames (42),
- four angle brackets (52 to 58) connecting each longitudinal member (44, 46) to each lateral panel (48, 50), accommodated in recesses (D) provided on the transverse frames (42),
**characterized in that** the assembly method comprises a step of fixing an angle bracket (52 to 58) on each of the first and second lateral panels (48, 50) so as to obtain an L form (60) for each of the first and second lateral panels (48, 50) prior to a placement of said L forms (60) each placed against two sides of each transverse frame (42).

2. Method for assembling a primary structure of an aircraft pylon according to Claim 1, **characterized in that** the assembly method comprises a step of fixing an angle bracket (52 to 58) on each of the first and second longitudinal members (44, 46) so as to obtain an L form (60) for each of the first and second longitudinal members (44, 46) prior to a placement of said L forms (60) each placed against two sides of each transverse frame (42).

3. Method for assembling a primary structure of an aircraft pylon according to the preceding claim, **characterized in that** a first wing (52.1) of a first angle bracket (52) is connected to a first longitudinal edge (44.1) of the first longitudinal member (44), a second wing (54.2) of a second angle bracket (54) is connected to a first longitudinal edge (48.1) of the first lateral panel (48), a first wing (56.1) of a third angle bracket (56) is connected to a first longitudinal edge (46.1) of the second longitudinal member (46) and a second wing (58.2) of a fourth angle bracket (58) is connected to a first longitudinal edge (50.1) of the second lateral panel (50).

4. Method for assembling a primary structure of an aircraft pylon according to the preceding claim, **characterized in that** it comprises the following steps of:
- positioning the first longitudinal member (44) placed against a first side (c1) of the transverse frames (42) and of a second wing (52.2) of the first angle bracket (52) placed against a second side (c2) of the transverse frames (42),
- positioning of the first lateral panel (48) placed against the second side (c2) of the transverse frames (42) and of a first wing (54.1) of the second angle bracket (54) placed against a third side (c3) of the transverse frames (42), said first lateral panel (48) covering the second wing (52.2) of the first angle bracket (52),
- positioning of the second longitudinal member (46) placed against the third side (c3) of the transverse frames (42) and of a second wing (56.2) of the third angle bracket (56) placed against a fourth side (c4) of the transverse frames (42), said second longitudinal member (46) covering the first wing (54.1) of the second angle bracket (54),
- positioning of the second lateral panel (50) placed against the fourth side (c4) of the transverse frames (42) and of a first wing (58.1) of the fourth angle bracket (58) placed against the first side (c1) of the transverse frames (42), by inserting the first wing (58.1) of the fourth angle bracket (58) between the first side (c1) of the transverse frames (42) and the first longitudinal member (44), the second lateral panel (50) covering the second wing (56.2) of the third angle bracket (56).

5. Method for assembling a primary structure of an aircraft pylon according to Claim 1, **characterized in that** the assembly method comprises a step of fixing two angle brackets (54, 56) to one of the first and second longitudinal members (44, 46) so as to obtain a U form (62) prior to a placement of the first and second longitudinal members (44, 46) placed against the sides of each transverse frame (42) .

6. Method for assembling a primary structure of an aircraft pylon according to the preceding claim, **characterized in that** it comprises the following steps of:
- positioning of the longitudinal member (46), provided with the two angle brackets (54, 56), placed against one of the sides (c2) of the transverse frames (42), wings (54.2, 56.2) of the two angle brackets (54, 56) being arranged on either side of the transverse frames (42),
- positioning of the first and second lateral panels (48, 50) placed against two opposite sides (c2, c4) of the transverse frames (42), and
- positioning of the longitudinal member (44) that is not provided with an angle bracket placed against one of the sides (c1) of the transverse frames (42).

7. Method for assembling a primary structure of an aircraft pylon according to the preceding claim, **characterized in that** the assembly method comprises a step of placement of:
- first fixings (66.1), perpendicular to a vertical median plane (PMV), traversing one of the first and second lateral panels (48), a wing (54.2, 56.2) of one of the two angle brackets (54, 56) integral with the first or second longitudinal member (46) and at least partially the transverse frames (42),
- second fixings (66.2), perpendicular to the vertical median plane (PMV), traversing the other of the first and second lateral panels (48, 50), a wing (54.2, 56.2) of the other angle bracket (54, 56) integral with the first or second longitudinal member (44, 46) and at least partially the transverse frames (42),
- third fixings (66.3), parallel to the vertical median plane (PMV), traversing the longitudinal member (44) that is not provided with an angle bracket, a wing (52.1) of an angle bracket integral with one of the first and second lateral panels (48) and at least partially the transverse frames (42),
- fourth fixings (66.3), parallel to the vertical median plane (PMV), traversing the longitudinal member (44) that is not provided with an angle bracket, a wing (52.1) of an angle bracket integral with the other of the first and second lateral panels (48) and at least partially the transverse frames (42).
